# DEMANDE DE BREVET EUROPEEN

(11) **EP 2 006 553 A1**
(43) Date de publication de la demande: **24.12.2008**
(21) Numéro de dépôt: 07290761.1
(22) Date de dépôt: 20.06.2007
(51) Int. Cl.: F16B 37/04

(54) **Agencement de fixation d'une pièce sur une autre**

(71) Demandeur: Lisi Automotive Rapid, 95650 Puiseux Pontoise (FR)
(72) Inventeur: Marcel, Gilles, 95660 Champagne sur Oise (FR); Guerineau, Ludovic, 53480 Vaiges (FR)
(74) Mandataire: Berger, Helmut

(57) **Abrégé**

L'invention concerne un agencement fixation d'une première pièce à une seconde pièce.

Cet agencement est du type comprenant un dispositif écrou susceptible d'être monté sur la première pièce et une vis de fixation de la première pièce sur la seconde pièce. L'agencement est caractérisé en ce que le dispositif écrou (1) est en forme d'un portefeuille à deux volets (6, 7) dont l'un (7) porte sur sa face interne (10) un fût (11) et dont l'autre (6) est pourvu dans sa face interne (18) d'un évidement (19) de réception de l'extrémité du fût (11) dans la position fermée du portefeuille et en ce que les deux volets (6, 7) comportent des moyens de verrouillage, avantageusement amovibles, du fût (11) dans l'évidement de réception (19).

L'invention est utilisable dans le domaine des véhicules automobiles.

## Description

L'invention concerne un agencement de fixation d'une première pièce à une seconde pièce, du type comprenant un dispositif écrou susceptible d'être prémonté sur la première pièce et une vis de fixation de la première pièce sur la seconde pièce.

Les agencements de ce type, qui sont connus, présentent l'inconvénient de ne pas assurer une bonne tenue du dispositif écrou sur la première pièce, d'impliquer un effort de montage relativement important et de provoquer la détérioration de cette pièce.

L'invention a pour but de pallier ces inconvénients.

Pour atteindre ce but, l'agencement selon l'invention est caractérisé en ce que le dispositif écrou est en forme d'un portefeuille à deux volets dont l'un porte sur sa face interne un fût et dont l'autre est pourvu dans sa face interne d'un évidement de réception de l'extrémité du fût dans la position fermée du portefeuille et en ce que les deux volets comportent des moyens de verrouillage, avantageusement amovibles, du fût dans l'évidement de réception.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en coupe illustrant un agencement selon l'invention dans sa position de fixation d'une première pièce sur une deuxième pièce ;
- la figure 2 est une vue en perspective et en coupe, semblable à la figure 1, mais montrant la vis au début de son engagement dans le dispositif écrou ;
- les figures 3 et 4 sont deux vues en perspective du dispositif écrou en forme de portefeuille, dans sa position ouverte ;
- la figure 5 est une vue en perspective, montrant le dispositif écrou, à l'état ouverte, en train d'être monté sur la première pièce ;
- la figure 6 est une vue en perspective, similaire à la figure 4, mais montrant le dispositif écrou dans sa position fermée, monté sur la première pièce ; et
- la figure 7 est une vue en coupe le long de la ligne VI-VI de la figure 6.

L'invention est décrite ci-après dans une application avantageuse, dans laquelle le dispositif écrou est connu sous le terme « clip de pare-bout » utilisé dans le milieu automobile, par exemple pour être monté sur des tapis de sol, des panneaux plastiques et analogues.

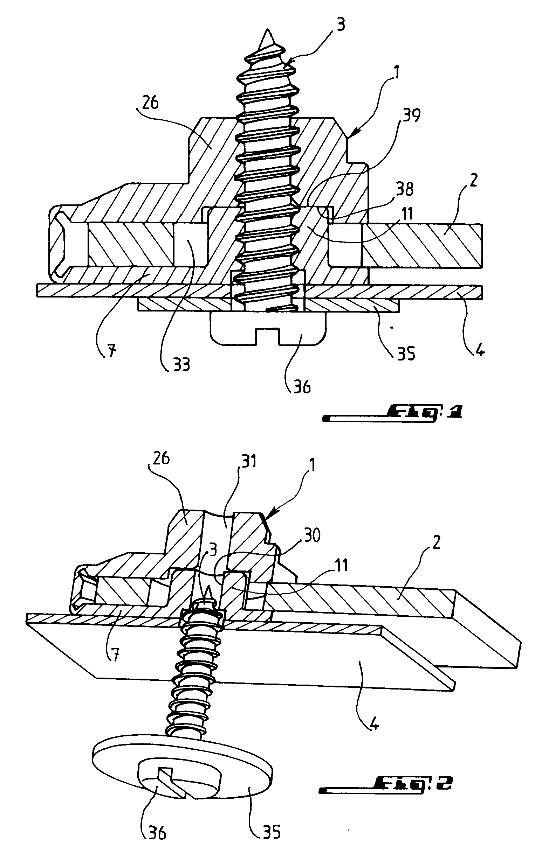

Comme le montrent notamment les figures 1 et 2, l'agencement selon l'invention comporte le dispositif écrou 1 adapté pour être embarqué ou monté sur une première pièce 2 et une vis 3 destinée à être vissée dans le dispositif écrou pour assembler une deuxième pièce 4 sur la première pièce 2.

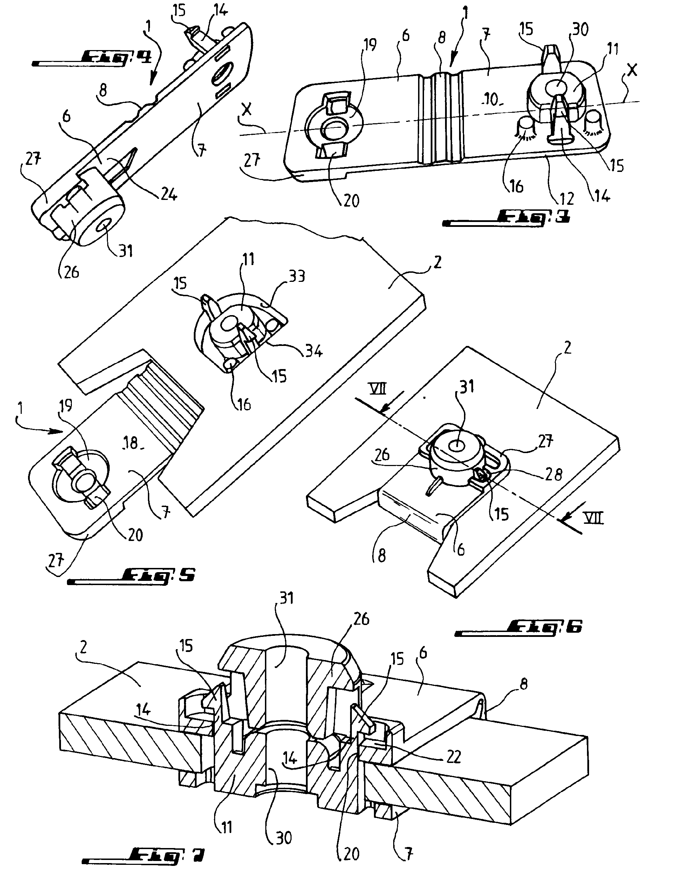

Comme l'illustrent notamment les figures 3 à 6, le dispositif écrou 1 est en forme d'un portefeuille pliable entre une position ouverte représentée sur les figures 3 à 5 et une position fermée conformément à la figure 6. Le dispositif écrou 1 comporte deux volets 6, 7 et une partie de base à double charnière 8 d'articulation des deux volets. Cette base permet de faire passer le dispositif écrou de sa position ouverte dans laquelle les deux volets sont alignés dans sa position fermée dans laquelle les deux volets sont repliés l'un sur l'autre, et inversement. Dans sa position fermée, le dispositif 1 présente la forme d'un U.

L'un des volets, dans l'exemple représenté le volet 7, porte sur sa face interne 10, sur sa partie d'extrémité libre, un ergot 11 en forme d'un fût et, de part et d'autre de celui-ci, entre le fût et le bord latéral longitudinal correspondant 12 du portefeuille une patte d'agrafage 14 destinée à permettre la fixation rapide et avantageusement amovible du volet 7 sur le volet 6 dans la position fermée du dispositif écrou en forme de portefeuille 1. Les deux pattes 14 sont disposées, de préférence, sur une ligne parallèle à l'axe de pivotement de la base d'articulation 8. Chaque patte d'agrafage 14 fait saillie perpendiculairement de la face interne 10 du volet 7 et porte à son extrémité libre un élément en forme d'un crochet 15 dont la face avant est en forme d'une rampe 16 et qui s'étend, dans l'exemple représenté, perpendiculairement à l'axe longitudinal médian X-X du portefeuille, vers l'extérieur. Les pattes sont élastiquement déformables pour que chaque élément de crochet 15 soit déplaçable élastiquement perpendiculairement à l'axe longitudinal entre la position représentée et une position repoussée plus près de l'axe X-X, à l'encontre de la force de rappel qu'exerce les corps de pattes.

Le volet 7 porte en outre sur sa face interne 10, de part et d'autre d'une des deux pattes 14, alignés dans la direction longitudinale du dispositif écrou, deux ergots 17 de détrompage permettant le positionnement relatif correct du dispositif écrou 1 sur sa pièce de support 2 comme on le voit sur la figure 5.

L'autre volet 6 du dispositif écrou 1 présente sur sa face interne 18 un évidement 19 de forme complémentaire à celle de l'extrémité du fût 11 du volet 7, pour être en mesure de recevoir cette extrémité dans la position fermée du portefeuille d'écrou. De chaque côté de l'évidement 19 est pratiqué dans le volet 6 un perçage 20 de réception d'une patte d'agrafage 14.

Les perçages 20 sont positionnés et configurés de façon à permettre, lors de la fermeture de l'écrou portefeuille 1, le passage des crochets 15 des pattes 14 alors élastiquement déformées, pour que ces crochets puissent venir en prise derrière le volet 6 dans une zone d'accrochage notée 21.

Le volet 6 porte sur sa face extérieure 24 une saillie en forme de fût 26 qui s'étend perpendiculairement de cette face vers l'extérieur. On constate que la face 24 présente au niveau du fût 26 une sur-épaisseur 27. Les zones d'accrochage 22 sont réalisées dans cette sur-épaisseur sous forme d'évidements 28 sur le fond desquels les crochets prennent appui.

Le fût 11 sur le volet 7 et le fût 26 sur la patte 6 comportent en leur centre des trous les traversant axialement, respectivement 30 et 31. Ces trous présentent un filetage interne compatible au filetage de la vis 3, qu'ils sont destinés à recevoir dans la position d'assemblage des deux pièces 2 et 4, comme on le voit sur les figures 1 et 2. Dans cet état d'assemblage, les deux fûts sont axialement alignés pour que la vis 3 puisse traverser les deux volets 6 et 7 en passant à travers les fûts alignés 11 et 26.

Comme l'illustrent notamment les figures 5 et 6, lors de l'assemblage, le dispositif écrou en forme de portefeuille 1 est tout d'abord monté sur la première pièce 2, qui constitue sa pièce de support. A cette fin ce support comporte un perçage 33 dont la forme est déterminée par le fût 11 du volet 7 et des ergots de détrompage 16. Ce perçage est de forme non symétrique par rapport à l'axe longitudinal médiane X-X du dispositif écrou. Son bord 36 du côté des ergots 16 est sensiblement rectiligne tandis que le bord, opposé par rapport à l'axe X-X est arqué, si bien que le dispositif 1 ne puisse être monté sur sa pièce de support 2 que dans une seule position.

Le fonctionnement de l'agencement de fixation de deux pièces, selon l'invention ressort déjà de la description de la structure qui vient d'être faite et des figures. Il suffit de retenir que le dispositif écrou 1 en forme de portefeuille est tout d'abord monté sur sa pièce de support 2 en faisant passer le fût 11 ainsi que les pattes d'agrafage 14 et les ergots de détrompage 16 par le perçage 33 de la pièce 2. Puis le volet 6 est rabattu sur le volet 7 en faisant passer les crochets 15 d'agrafage des pattes 14 par les perçages complémentaires 20, ce qui implique la réception du fût 11 dans l'évidement complémentaire 19 du volet 6. Grâce aux surfaces avant 16 en forme de rampe des crochets 15, les pattes 14 sont élastiquement déformées pour permettre le passage des crochets qui ensuite vont s'encliqueter derrière les zones d'appui 22 sur la face externe du volet 6.

Comme le montre notamment la figure 7, après cette fermeture du dispositif 1 en forme de portefeuille, les deux fûts 11 et 26 sont axialement alignés. La fermeture du portefeuille est réversible. Il suffit à cette fin de repousser les crochets 15 en direction de l'axe X-X et de déformer ainsi les pattes 14 pour que le verrouillage du volet 6 sur le volet 7 cesse et le volet 6 puisse être séparé du volet 7.

Après le montage du dispositif écrou 1 sur la pièce 2, la seconde pièce 4 peut être fixée sur cette pièce 1, comme on le voit sur les figures 1 et 2 à l'aide de la vis 3. La pièce 4 prenant appui sur la face externe du volet 7, la vis 3 est vissée dans les fûts 11 et 26 axialement alignés, avec l'interposition d'une rondelle intermédiaire 35 entre la tête 36 de la vis et la pièce 4.

Les figures 1 et 2 montrent que, dans la position de fixation des deux pièces 4 et 2 l'une sur l'autre, le fût 11 est en appui par sa face frontale 38 sur le fond 39 de l'évidement de réception 19 du volet 6.

L'agencement selon l'invention présente de nombreux avantages. On constate notamment que, lorsque le dispositif écrou 1 est monté sur son support 2, l'écrou ne se verrouille pas sur ce support mais sur lui-même dans la mesure où la face frontale 38 du fût 11 est en appui sur le fond 39 de l'évidement 19 du fût 6. Le montage en portefeuille du dispositif écrou donne une bonne tenue de ce dispositif sur le support 1. Lors du vissage, la vis ne pousse pas sur les pattes d'agrafage. L'effort de montage est faible et le double fût évite la détérioration de la pièce de support 2. Enfin, l'écrou est monobloc.

## Revendications

1. Agencement de fixation d'une première pièce à une seconde pièce, du type comprenant un dispositif écrou susceptible d'être monté sur la première pièce et une vis de fixation de la première pièce sur la seconde pièce, **caractérisé en ce que** le dispositif écrou (1) est en forme d'un portefeuille à deux volets (6, 7) dont l'un (7) porte sur sa face interne (10) un fût (11) et dont l'autre (6) est pourvu dans sa face interne (18) d'un évidement (19) de réception de l'extrémité du fût (11) dans la position fermée du portefeuille et **en ce que** les deux volets (6, 7) comportent des moyens de verrouillage, avantageusement amovibles, du fût (11) dans l'évidement de réception (19).

2. Agencement selon la revendication 1, **caractérisé en ce que**, dans la position fermée du dispositif écrou en forme de portefeuille (1), la face frontale (38) du fût (11) prend appui sur le fond (39) de l'évidement (19).

3. Agencement selon l'une des revendications 1 ou 2, **caractérisé en ce que** les moyens de verrouillage du fût (11) du volet (7) dans l'évidement de réception (19) du volet (6) comportent au moins une patte élastiquement déformable (14), prévue sur un volet (7) et pourvue d'un élément de crochet (15) destiné à venir en prise derrière une zone (22) d'accrochage prévue sur l'autre volet (6).

4. Agencement selon la revendication 3, **caractérisé en ce que** le volet (6) pourvu de l'évidement de réception (19) du fût (11) du volet (7) porte sur sa face extérieure un fût (26) qui, à l'état fermé du dispositif écrou en forme de portefeuille (1) est axialement aligné avec le fût (11) du volet (7) et **en ce que** chaque fût (11, 26) comporte un trou (30, 31) le traversant axialement, ces trous étant axialement alignés à l'état fermé du dispositif écrou (1) pour permettre le vissage de la vis (3) dans le dispositif écrou pour la fixation de la seconde pièce (4) sur la première pièce (2).

5. Agencement selon l'une des revendications précédentes, **caractérisé en ce que** la pièce (2) de support du dispositif écrou (1) comporte un perçage de passage du fût (11) du volet (6), permettant la fermeture du dispositif écrou en portefeuille par engagement du fût (11) dans l'évidement de réception (19).

6. Agencement selon l'une des revendications précédentes, **caractérisé en ce que** le dispositif écrou (1) comporte des moyens de détrompage (17) assurant le montage du dispositif écrou (1) sur sa pièce de support (2) seulement dans sa position correcte.
